# FASCICULE DE BREVET EUROPEEN

(11) **EP 3 235 151 B1**
(45) Date de publication et mention de la délivrance du brevet: **16.02.2022**
(21) Numéro de dépôt: 15817163.7
(22) Date de dépôt: 15.12.2015
(51) Int. Cl.: H04B 17/15, H04B 17/29, H04B 1/403, H04B 17/19

(54) **PROCÉDÉ DE TEST MIS EN OEUVRE PAR UN ÉQUIPEMENT COMPRENANT AU MOINS DEUX DISPOSITIFS DE RADIOCOMMUNICATION**
DURCH EINE EINRICHTUNG MIT MINDESTENS ZWEI FUNKKOMMUNIKATIONSVORRICHTUNGEN IMPLEMENTIERTES TESTVERFAHREN
TEST METHOD IMPLEMENTED BY AN APPARATUS COMPRISING AT LEAST TWO RADIO COMMUNICATION DEVICES

(30) Priorité: 17.12.2014 FR 1462597
(43) Date de publication de la demande: 25.10.2017
(73) Titulaire: Sagemcom Broadband SAS, 92500 Rueil-Malmaison (FR)
(72) Inventeur: JAULIN, Jean-Philippe, 92500 Rueil Malmaison (FR); DANGY-CAYE, Nicolas, 92500 Rueil Malmaison (FR)
(74) Mandataire: Cabinet Le Guen Maillet
(86) Numéro de dépôt international: PCT/EP2015/079745
(87) Numéro de publication internationale: WO 2016/096823

(56) Documents cités:
- EP-A2- 2 434 669
- EP-B1- 2 434 669
- CN-B- 101 969 652
- US-A1- 2013 266 052

## Description

La présente invention concerne un procédé de test mis en œuvre par un équipement pour tester au moins un émetteur et/ou un récepteur de dispositifs de radiocommunication que comporte ledit équipement.

Le test d'un dispositif de radiocommunication d'un équipement qui l'incorpore, tel qu'une passerelle, permet de déterminer la validité fonctionnelle de celui-ci et peut être réalisé, soit à l'issue de la production de cet équipement, soit en cours de son utilisation par un utilisateur pour notamment diagnostiquer une éventuelle panne. Généralement, il nécessite la mise en œuvre de moyens externes à l'équipement à tester pour le réaliser, ce qu'un utilisateur n'a généralement pas.

Particulièrement dans le cas des nombreux dispositifs de radiocommunication qui peuvent être intégrés dans un équipement (Wi-Fi 2,4GHz, Bluetooth, Zigbee, Wi-Fi 5GHz, DECT, ...), un tel test est toujours délicat. En effet, la liaison entre l'un de ces dispositifs de radiocommunication de l'équipement considéré et un appareil distant, généralement un appareil de test, met en œuvre plusieurs interfaces :
- Au sein de l'équipement lui-même, une interface entre le processeur principal gérant la communication pour l'équipement considéré et le composant émetteur-récepteur radiofréquence qui est en charge de la communication ainsi qu'une interface physique entre ce composant RF et au moins une antenne (composant RF et antennes forment ensemble le dispositif de radiocommunication à tester). Cette interface physique peut être constituée d'un grand nombre de composants passifs (filtres, composants d'adaptation, etc.), ainsi que de composants actifs (amplificateurs).
- Une interface constituée du milieu aérien servant de support à la propagation des ondes radiofréquences entre l'équipement lui-même et l'appareil distant.
- Au sein de l'appareil distant, une interface physique entre sa ou ses antennes et un composant radiofréquence en charge de la communication et une interface entre ce composant RF et le processeur principal gérant la communication pour l'appareil distant.

De plus, l'établissement d'une communication entre l'équipement à tester et un appareil distant nécessite la mise en œuvre de protocoles de communication propres à chacune des technologies utilisées par les dispositifs de radiocommunication en œuvre. Suivant la technologie utilisée, il peut être nécessaire de mettre en œuvre des clefs (WEP, WPA, etc. dans le cas du standard WiFi, PIN code dans le cas du standard Bluetooth, etc.), des protections de type droits d'accès ou liste d'adresses MAC autorisées, ou autres.

Le processeur principal d'un équipement, du fait qu'il établit un dialogue logique avec le composant émetteur-récepteur RF du même équipement, est en mesure de connaître l'état de l'interface entre eux. Le diagnostic du dispositif de radiocommunication dans son ensemble (composant RF + antennes) revient donc à diagnostiquer le fonctionnement du composant RF, ainsi que de son interface avec la ou les antennes de l'équipement.

Plusieurs méthodes connues sont aujourd'hui utilisées pour effectuer un diagnostic d'un dispositif de radiocommunication.

Selon une méthode particulière, on effectue le test séparé de la chaîne d'émission et de la chaîne de réception au moyen d'un ou plusieurs appareils de test externes. Ce type de test est largement utilisé lors des phases de fabrication ou de dépannage, et nécessite l'emploi d'un matériel spécialisé.

Pour vérifier le fonctionnement de la chaîne d'émission, l'équipement à tester est placé dans un mode dit "test émission" dans lequel un émetteur de son dispositif de radiocommunication transmet un signal de test particulier et connu. Un appareil de mesure distant de type analyseur reçoit alors le signal de test normalement transmis par l'équipement, l'analyse et en donne les caractéristiques. La différence entre le résultat obtenu et le résultat attendu peut renseigner le technicien sur le comportement de la chaîne d'émission.

De la même manière, pour vérifier le fonctionnement de la chaîne de réception, un appareil de mesure distant de type générateur transmet au dispositif de radiocommunication de l'équipement un signal de test particulier et connu. L'équipement est placé dans un mode dit "test réception" dans lequel un récepteur de son dispositif de radiocommunication retourne un signal reflétant le signal qu'il reçoit. La différence entre le résultat obtenu et le résultat attendu peut renseigner le technicien sur le comportement de la chaîne de réception.

Ce type de test permet de caractériser les chaînes d'émission et de réception de manière indépendante tout en faisant abstraction du protocole de communication mis en œuvre. Il est tout à fait adapté au dépannage, mais à cause de la nécessité d'utiliser un matériel complexe externe, il ne peut être utilisé à des fins de diagnostic sur le terrain chez un utilisateur non technicien.

Selon une autre méthode, on effectue le test au travers d'une tentative de connexion réelle entre deux équipements comportant les mêmes interfaces de radiocommunication. L'établissement d'une connexion sans fil entre ces deux équipements nécessite une phase préalable d'enregistrement mutuel. Cette phase met en œuvre les liaisons montantes (équipement utilisé en tant que périphérique vers équipement utilisé en tant que station de base) et descendantes (équipement utilisé en tant que station de base vers équipement utilisé en tant que périphérique). Une analyse simple permet d'obtenir des informations sur les dispositifs de radiocommunication des deux équipements.

L'équipement ayant le rôle de station de base émet une information particulière (« beacon » dans le cas d'un dispositif Wi-Fi, « dummy-bearer » dans le cas d'un dispositif DECT, etc.). L'équipement ayant le rôle de périphérique et souhaitant s'enregistrer sur l'équipement utilisé en tant que station de base présente à son utilisateur une liste des stations de base potentiellement joignables. Si l'équipement jouant le rôle de station de base figure sur cette liste, l'utilisateur peut considérer que l'émetteur du dispositif de radiocommunication de l'équipement jouant le rôle de station de base et que le récepteur du dispositif de radiocommunication de l'équipement jouant le rôle de périphérique sont toutes les deux fonctionnelles. Par contre, l'absence dans cette liste ne prouve pas un dysfonctionnement, et si dysfonctionnement il y a malgré tout, cette absence ne permet pas d'en identifier la cause (matériel, clefs, émetteur de l'équipement station de base, récepteur de l'équipement périphérique, etc.)

Lorsque l'utilisateur sélectionne l'équipement station de base et lance la procédure d'enregistrement, un échange bidirectionnel est mis en œuvre entre cet équipement station de base et l'équipement périphérique (demande d'enregistrement, échange de clefs, accord, etc. qui sont dépendants de la technologie et du protocole utilisé). Si l'enregistrement aboutit, l'utilisateur peut considérer que l'ensemble des dispositifs de radiocommunication sont fonctionnels. Dans le cas contraire, les informations retournées par les équipements ne sont pas suffisantes pour identifier la cause du dysfonctionnement (matériel, clefs, droits d'accès, etc.).

Ce type de test couramment utilisé même involontairement par l'ensemble des utilisateurs de produits communicants et non experts est très empirique, montre rapidement ses limites et nécessite l'emploi d'un matériel autre que l'équipement à diagnostiquer. Il ne peut donc pas être utilisé pour établir un diagnostic fiable.

Une autre méthode est une méthode de diagnostic de la chaîne d'émission au moyen d'un détecteur de champ radioélectrique. Ce procédé basique et largement connu de l'homme de l'art consiste à mesurer le champ émis par une chaîne de transmission au moyen d'un détecteur de champ radioélectrique relié à une antenne de mesure. Ce type de mesure donne une bonne information sur le niveau de signal réellement transmis par l'antenne, et donc sur le bon état de l'ensemble de la chaîne de transmission. Néanmoins, cette méthode ne permet pas de caractériser les performances de la chaîne de réception.

Le document EP 2 434 669 A2 décrit une méthode comprenant la détection par un récepteur d'un signal de test émis par un émetteur dans un canal de réception correspondant au canal d'émission.

Une autre méthode est un diagnostic de la chaîne de réception au moyen d'un générateur de signal de test. Une telle méthode est notamment décrite dans le brevet US-A-8280442 et consiste à évaluer les effets d'un signal particulier injecté dans la chaîne de réception, et ainsi de caractériser ses performances. Ce procédé ne permet pas non plus de caractériser les performances de la chaîne de transmission.

De plus, ces dernières méthodes nécessitent l'emploi de composants dont la seule fonction est d'assurer ce diagnostic, ce qui induit donc un coût supplémentaire dans l'équipement.

Le but de la présente invention est de proposer un procédé de diagnostic d'un dispositif de radiocommunication d'un équipement qui ne résout les problèmes posés par les méthodes de diagnostic de l'art antérieur qui viennent d'être brièvement décrites.

A cet effet, la présente invention concerne un procédé de test selon la revendication 1, un équipement selon la revendication 8, un programme selon la revendication 11 et de moyens de stockage selon la revendication 12.

Les caractéristiques de l'invention apparaîtront plus clairement à la lecture de la description suivante d'exemples de réalisation, ladite description étant faite en relation avec les dessins joints, parmi lesquels :
La Fig. 1 est un équipement qui est susceptible de mettre en œuvre un procédé de test selon la présente invention,
La Fig. 2 est un diagramme qui illustre les étapes qui sont mises en œuvre par un procédé de test selon la présente invention,
La Fig. 3 est un diagramme illustrant un mode de réalisation particulier d'un procédé de test selon la présente invention,
La Fig. 4 est un diagramme illustrant les étapes qui sont mises en œuvre par une étape de sélection d'un ou deux canaux d'émission pour l'émission d'un signal de test conformément au procédé de test selon la présente invention,
La Fig. 5 est un diagramme illustrant les étapes qui sont mises en œuvre par une étape de configuration des dispositifs de radiocommunication émetteur et récepteur pour la mise en œuvre d'un procédé de test selon la présente invention, et
La Fig. 6 est un diagramme illustrant les étapes qui sont mises en œuvre par une étape d'émission et de détection pour la mise en œuvre d'un procédé de test selon la présente invention.

La présente invention tire partie du fait que des équipements, tels que des passerelles, intègrent au moins deux dispositifs de radiocommunication qui utilisent la même bande de fréquence, par exemple la bande dite ISM (Industrielle, Scientifique et Médicale) comprise entre 2,4 et 2,483 GHz, même si elles sont de natures différentes. Ces dispositifs de radiocommunication peuvent être du type Wi-Fi, Bluetooth, ZigBee, ou autres.

Les chaînes d'émission et de réception de ces différents dispositifs de radiocommunication étant prévues pour fonctionner sur une bande de fréquence semblable, les conditions de propagation du signal depuis la sortie de l'émetteur d'un dispositif de radiocommunication d'un équipement vers l'entrée du récepteur d'un autre dispositif de radiocommunication du même équipement sont optimales et répétables. Partant de ce principe, la simple réception par le dispositif de radiocommunication récepteur d'un signal de test émis par le dispositif de radiocommunication émetteur suffit à considérer que la chaîne d'émission du dispositif de radiocommunication émetteur et la chaîne de réception du second dispositif de radiocommunication sont suffisamment fonctionnelles pour assurer la liaison.

Néanmoins, les principes de modulation utilisés par ces différents dispositifs de radiocommunication sont très souvent de nature différente (occupation fréquentielle et ou temporelle, schéma de modulation, codage canal, accès au support, etc.), si bien que deux dispositifs de radiocommunication différents d'un même équipement ont très peu de chance de pouvoir dialoguer entre eux. En effet, un signal émis par un dispositif de radiocommunication émetteur est perçu comme du bruit dans le canal de réception d'un dispositif de radiocommunication.

La présente invention concerne un procédé de diagnostic d'un dispositif de radiocommunication d'un équipement profitant de la présence simultanée au sein d'un même équipement de plusieurs dispositifs de radiocommunication partageant la même bande de fréquence, même s'ils n'utilisent pas le même protocole de communication, qui permette, sans augmentation de coût, de remédier aux défauts évoqués précédemment dans le préambule de la présente description concernant les méthodes de diagnostic de l'art antérieur.

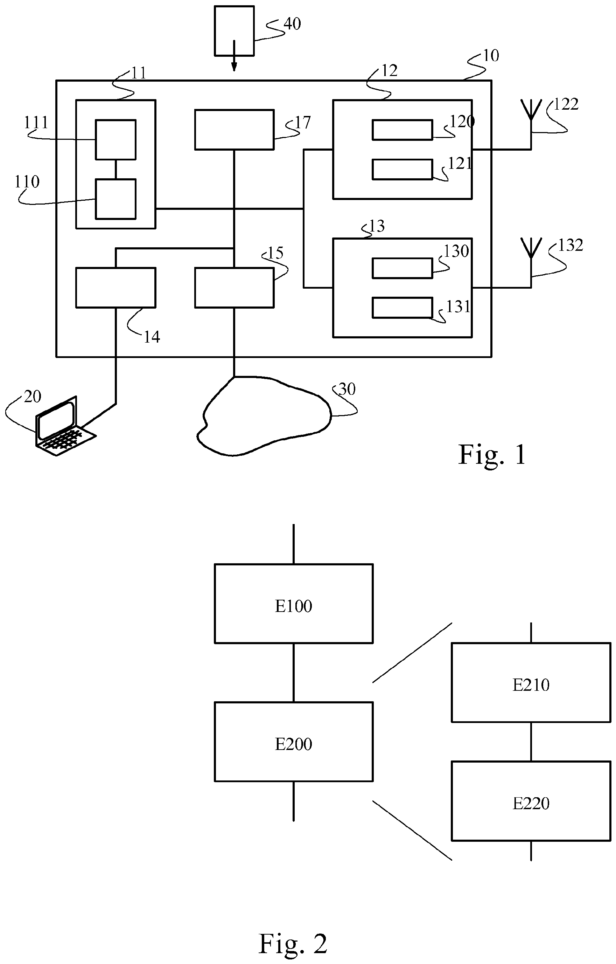

Un équipement qui est susceptible de mettre en œuvre un procédé de diagnostic selon la présente invention est représenté à la Fig. 1 sous la forme d'une passerelle 10 qui comporte un contrôleur 11 prévu pour piloter un dispositif de radiocommunication 12 conforme à un premier standard et un dispositif de radiocommunication 13 conforme à un second standard, par exemple différent du premier standard. Le contrôleur 11 pilote encore, en tant que contrôleur de passerelle, une interface réseau 14, par exemple du type Ethernet, pour pouvoir, par exemple, communiquer avec un ordinateur 20 et une interface globale Internet 15, par exemple du type xDSL pour communiquer sur l'Internet 30.

Le dispositif de radiocommunication 12 comprend un émetteur 120 et un récepteur 121 et est relié à une antenne 122 pour l'émission et la réception d'ondes électromagnétiques dans des canaux d'émission et de réception respectifs.

De même, le dispositif de radiocommunication 13 comprend un émetteur 130 et un récepteur 131 et est relié à une antenne 132 pour l'émission et la réception d'ondes électromagnétiques dans des canaux d'émission et de réception respectifs.

Le procédé de test selon la présente invention est décrit pour un équipement tel que celui qui vient d'être décrit en relation avec la Fig. 1 en considérant, à titre exemplatif, que le premier standard est conforme à la norme dite Wi-Fi alors que le second standard est la norme dite Bluetooth.

On rappelle ici que la norme Wi-Fi est relative à un ensemble de protocoles de communication régis pour les normes ISO/EIC 8802/11 (IEEE 802.11). Plus spécifiquement, les normes IEEE 802.11b et g opèrent dans la bande de fréquences des 2.4 GHz. De même, la norme dite Bluetooth est relative à la norme IEEE 802.15. Elle opère dans une bande de fréquence comprise entre 2,4GHz et 2,4835GHz.

Le procédé de diagnostic selon l'invention est mis en œuvre pour tester un émetteur d'un dispositif de radiocommunication, dit par la suite dispositif de radiocommunication émetteur, par exemple l'émetteur 120 du dispositif de radiocommunication 12, au moyen d'un autre dispositif de radiocommunication, dit par la suite dispositif de radiocommunication récepteur, par exemple le dispositif de radiocommunication 13, du même équipement 10.

Ce procédé comprend une première étape E100 d'émission d'un signal de test dans un canal d'émission dudit émetteur 120 du dispositif de radiocommunication émetteur 12 (voir Fig. 2) et une seconde étape E200 de détection du signal de test dans un canal utilisé par ledit dispositif de radiocommunication récepteur 13 correspondant au canal d'émission utilisé par ledit dispositif de radiocommunication émetteur 12 pour l'émission dudit signal de test.

Le dispositif de radiocommunication émetteur 12 est celui de l'équipement 10 dont on désire réaliser le test de son émetteur 120, le dispositif de radiocommunication récepteur 13 étant alors un dispositif radiocommunication différent du dispositif de radiocommunication émetteur 12. Ou alors, le dispositif de radiocommunication récepteur 13 est celui de l'équipement 10 dont on désire réaliser le test de son récepteur 131, le dispositif de radiocommunication émetteur 12 étant alors un dispositif de radiocommunication différent du dispositif récepteur 13. Ou alors encore, le dispositif de radiocommunication émetteur 12 et le dispositif de radiocommunication récepteur 13 sont ceux de l'équipement 10 dont on désire réaliser les tests respectifs de leurs émetteur 120 et récepteur 131.

Dans un premier mode de réalisation, l'étape de détection E200 consiste à constater le déclenchement par le dispositif de radiocommunication récepteur 13 dudit équipement 10 d'un événement provoqué par la présence dudit signal de test émis par l'émetteur 120 du dispositif de radiocommunication émetteur 12.

Par exemple, lorsque le dispositif de radiocommunication émetteur 12 qui a émis ledit signal de test opère selon le standard Bluetooth et que le dispositif de radiocommunication récepteur 13 opère selon le standard Wi-Fi, l'étape de détection E200 peut consister à constater un retour d'erreur du type "Stuck beacon" du récepteur 131 du dispositif de radiocommunication 13 alors que l'émetteur 120 du dispositif de radiocommunication 12 émet le signal de test sur un canal d'émission et que le dispositif de radiocommunication 13 cherche également à accéder à un canal d'émission correspondant au canal d'émission utilisé par l'émetteur 120 du dispositif de radiocommunication 12. En effet, le dispositif de radiocommunication 13 utilisant un moyen d'accès au support du type CSMA-CA (Carrier Sense Multiple Access with Collision Avoidance : Accès multiple à détection de porteuse avec évitement de collision) ne peut émettre un signal de balise (beacon) du fait de la détection par son récepteur 131 du signal de test et retourne un message d'erreur du type "Stuck Beacon". L'étape de détection E200 consiste à constater le déclenchement de l'envoi de ce message.

De même, l'étape de détection E200 peut consister à constater le changement du canal de travail utilisé par le dispositif de radiocommunication récepteur 13 suite à l'émission, dans une bande de fréquence correspondant au canal de travail du moment, du signal de test par l'émetteur 120 du dispositif de radiocommunication 12. En effet, un dispositif de radiocommunication de type Wi-Fi met en œuvre une fonctionnalité dite "ACS" (Automatic Channel Selection : Sélection Automatique de Canal) par laquelle il effectue en permanence une cartographie de son environnement radio et sélectionne automatiquement le canal le moins perturbé. L'injection du signal de test dans une bande de fréquence correspondant au canal de travail du moment perturbe ce canal si bien que le dispositif de radiocommunication 13 Wi-Fi change de canal de travail. L'étape de détection E200 consiste donc à constater ce changement de canal.

Toujours de même, l'étape de détection E200 peut consister à utiliser la fonctionnalité dite "noise floor" pour effectuer une mesure du niveau de bruit dans la bande de fréquence correspondant au canal d'émission du signal de test et pour en déduire la présence du signal de test dans cette bande de fréquence.

Lorsque le dispositif de radiocommunication émetteur 12 opère selon le standard Wi-Fi et que le dispositif de radiocommunication récepteur 13 opère selon le standard Bluetooth, celui-ci mettant en œuvre la fonctionnalité dite "AFH" (Adaptive Frequency Hoping : Changement de Fréquence Adaptatif), l'étape de détection E200 peut consister à constater l'introduction d'un nouveau "bad" canal alors que le signal de test est émis par le dispositif de radiocommunication émetteur 12.

Dans un autre mode de réalisation, l'étape de détection E200 comprend une étape E210 de mesure du niveau de champ radioélectrique du signal présent pendant un intervalle de temps et dans un canal de réception dudit dispositif de communication récepteur 13 correspondant à l'intervalle de temps et au canal d'émission dudit signal de test émis par l'émetteur 12 dudit dispositif de communication émetteur 12 et une étape E220 de comparaison de ce niveau mesuré à un niveau cible.

L'étape de mesure en question E210 peut consister à lire, en tant que valeur du niveau de champ radioélectrique, la valeur dite RSSI (Received Signal Strength Indicator : indicateur de niveau de signal reçu) généralement utilisée dans les récepteurs radiofréquences pour connaître la puissance de réception d'un signal et pour apprécier l'occupation d'un canal.

Le niveau cible est un niveau prédéterminé qui a été préalablement établi.

Par exemple, il est établi théoriquement, au moment de la conception de l'équipement considéré, compte tenu de son architecture et des caractéristiques de propagation d'un signal émis depuis un émetteur 120 ; 130 d'un dispositif de communication 12 ; 13 vers un récepteur 131 ; 121 d'un autre dispositif de communication 13 du même équipement 10.

L'établissement théorique du niveau cible doit tenir compte des caractéristiques du signal de test émis en termes d'occupation spectrale, de type de modulation, etc. Il doit également tenir compte des caractéristiques du récepteur considéré en termes de bande passante et de performances de réception de champ radioélectrique. Ceci afin de permettre une mesure en tenant compte des caractéristiques propres de l'émetteur 120 et du récepteur 131 considérés.

Le niveau cible peut également être établi, lors de la conception ou de la fabrication de l'équipement, par une mesure du niveau de champ radioélectrique reçu par un récepteur 131 d'un dispositif de communication 13 dans la bande présumée d'un émetteur 120 d'un autre dispositif de communication 12 alors que celui-ci transmet un signal prédéterminé. Cette mesure permet d'évaluer les conditions de propagation réelle au travers de l'ensemble de la chaîne de communication considérée.

L'étape E220 de comparaison de la valeur du niveau cible obtenue lors de la conception ou de la fabrication du produit et de la valeur du niveau mesuré à l'étape E210 permet d'obtenir un diagnostic de l'état de l'ensemble des composants de la chaîne considérée. Le critère d'acceptation de cette comparaison pourra par exemple être une valeur du niveau cible correspondant à une valeur prédéterminée à obtenir, assortie d'une fenêtre de tolérance prédéterminée, et correspondant, par exemple, à la répartition probable des caractéristiques des différents éléments utilisés lors de la fabrication en série de l'équipement.

L'étape E210 de mesure du niveau de champ radioélectrique du signal de test émis peut être perturbée si plusieurs émetteurs proches, par exemple des émetteurs de dispositifs de radiocommunication d'équipements voisins autres que l'équipement considéré, utilisant la même bande de fréquence, et particulièrement le même canal de transmission, sont présents. Dans ce cas, le niveau de champ radioélectrique mesuré par le second dispositif de radiocommunication 13 est la somme des signaux émis par ces émetteurs proches et du signal de test qui est alors noyé dans ceux-ci.

Pour résoudre ce problème, selon la présente invention, l'émetteur 120 du dispositif de radiocommunication émetteur 12 émet un signal de test qui est signé selon un schéma déterministe, c'est-à-dire connu de tout émetteur et de tout récepteur de l'équipement considéré et prédéterminé.

Ainsi, le signal de test est par exemple signé sous la forme d'une séquence de bits temporelle prédéterminée (émission à des instants relatifs prédéterminés), et/ou fréquentielle prédéterminée (émission sur des canaux déterminés), et/ou de niveaux de puissance d'émission prédéterminés, combinées ou pas, que le récepteur 131 du dispositif de radiocommunication récepteur 13 peut distinguer des schémas d'émission que les émetteurs environnant sont susceptibles de mettre en œuvre.

Par exemple, le signal de test émis par l'émetteur 12 d'un dispositif de radiocommunication émetteur 12 est constitué d'un code binaire de 8 bits prenant une valeur prédéterminée, par exemple 10010110. Dans le cas d'une émission du signal de test par un émetteur 120 d'un dispositif de radiocommunication de type Wi-Fi, la valeur 1 de ce code peut correspondre à la transmission d'un signal Wi-Fi multiporteuses OFDM de charge utile aléatoire d'une largeur de 20MHz centrée sur le canal 3 (2422MHz) pendant une durée de 10ms à une puissance d'émission de 0dBm au point de sortie de l'émetteur de l'interface Wi-Fi et la valeur 0 de ce code correspond à une absence de transmission (niveau d'émission inférieur à -50dBm) également d'une durée de 10ms.

Considérons que la caractéristique de propagation entre l'émetteur 120 Wi-Fi et le récepteur 131 Bluetooth soit telle que l'atténuation totale tenant compte des composants, et de la bande passante fréquentielle du récepteur 131 soit de-33dB±5dB.

Dans le cas d'une chaîne de communication en bon état, le récepteur 131 du dispositif de radiocommunication récepteur 13, de type Bluetooth positionné par le contrôleur 11 en mode de réception permanente sur un de ses canaux compris entre 2413MHz (canal 11) et 2431MHz (canal 29), par exemple sur son canal 20, relève une valeur RSSI inférieure à -83dBm pour la réception d'un bit 0 du signal de test et-33dBm±5dB pour la réception d'un bit 1.

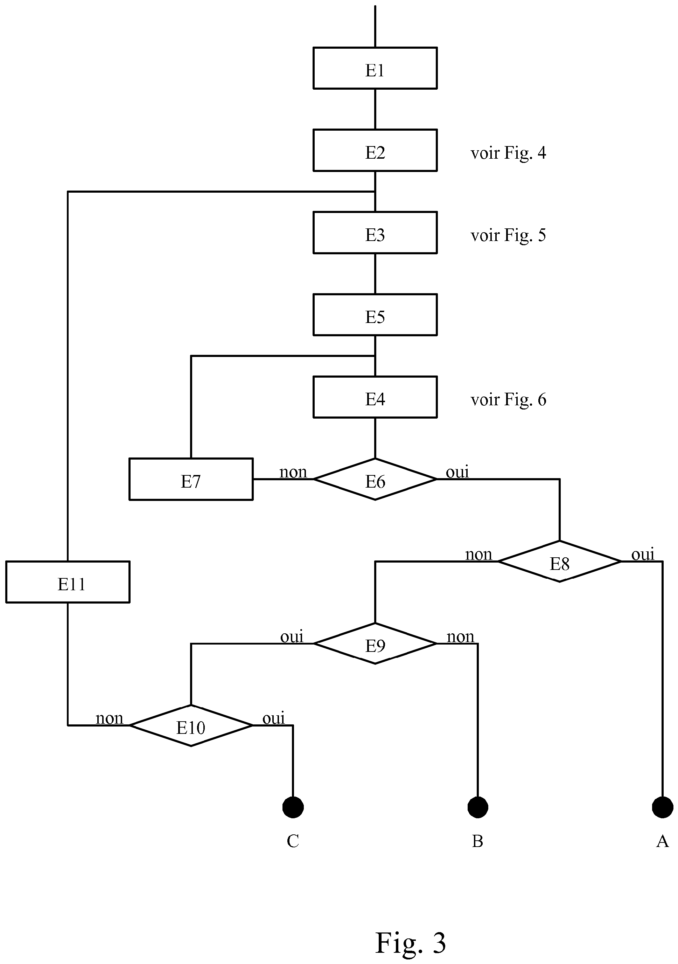

Une mise en œuvre particulière du procédé de test de la présente invention est maintenant décrite en relation avec la Fig. 3 et en se plaçant, à titre uniquement exemplatif, dans le cas de l'émission par un émetteur 120 d'un dispositif de communication 12 de type Wi-Fi et de réception par un récepteur 131 d'un dispositif de communication 13 de type Bluetooth.

L'étape E1 est une étape d'arrêt de l'activité normale des dispositifs de radiocommunication émetteur et récepteur 12 et 13 concernés par le test que l'on souhaite effectuer.

L'étape E2 est une étape de sélection d'un ou deux canaux d'émission pour l'émetteur 120 du dispositif de radiocommunication émetteur 12.

Un seul canal d'émission est sélectionné lorsque les bits à 1 et à 0 du code binaire constituant le signal de test sont émis sur le même canal d'émission. Par contre deux canaux d'émission sont sélectionnés lorsque les bits à 1 sont émis sur un canal d'émission et les bits à 0 sur un second canal d'émission.

Cette étape de sélection E2 peut consister à choisir arbitrairement ce ou ces canaux d'émission, par exemple, pour un dispositif de radiocommunication 12 du type Wi-Fi, le canal 1 centré sur la bande à 2412MHz et, éventuellement, le canal 11 centré sur la bande à 2462MHz.

Selon une variante de réalisation, l'étape de sélection E2 peut consister à choisir, parmi l'ensemble des canaux d'émission de l'émetteur 120 du dispositif de radiocommunication émetteur 12, le ou les deux canaux d'émission qui soient les plus calmes afin d'éviter les interprétations erronées causées par des émissions d'équipements étrangers.

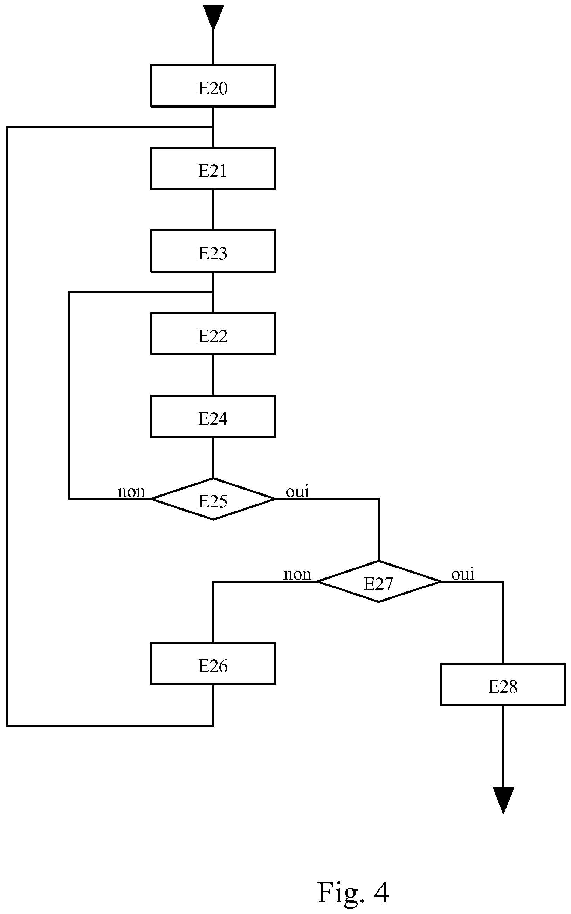

La Fig. 4 illustre les étapes qui sont alors mises en œuvre par l'étape E2.

Une étape E20 est une étape de sélection arbitraire d'un canal d'émission de l'émetteur 120 du dispositif de radiocommunication émetteur 12. Par exemple, pour un dispositif de radiocommunication émetteur 12 de type Wi-Fi, l'étape E20 peut consister à sélectionner arbitrairement le canal 1 centré sur la bande 2412MHz.

Une étape E21 est une étape de positionnement du dispositif de radiocommunication récepteur 13 sur un canal dont la fréquence centrale correspond à la fréquence centrale du canal d'émission du dispositif de radiocommunication émetteur 12. Par exemple, si le canal d'émission est le canal Wi-Fi 1 centré sur la fréquence 2412MHz, le dispositif de radiocommunication 13 de type Bluetooth est positionné sur le canal numéro 10 (2402MHz + 10 x 1MHz).

Une étape E22 est une étape de mesure du niveau de champ radioélectrique sur l'entrée du récepteur 131 du dispositif de radiocommunication récepteur 13, par exemple une étape de mesure RSSI.

On notera que durant cette mesure, l'émetteur 120 du dispositif de communication 12 n'émet aucun signal.

Cette étape E22 peut être répétée plusieurs fois grâce à une boucle sur le nombre N de mesures incluant une étape d'initialisation d'un compteur E23, une étape d'incrémentation E24 dudit compteur après chaque mesure de l'étape E22 et une étape E25 de vérification que le compte du compteur ne dépasse pas la valeur d'initialisation. A chaque mesure, l'étape E22 conserve la valeur maximale du niveau de champ radioélectrique reçu ainsi mesuré. Cette valeur donne une indication sur l'occupation du canal qui a été sélectionné à l'étape E20.

Les étapes E21 et E22 sont répétées pour chacun des canaux d'émission de l'émetteur 120 du dispositif de radiocommunication émetteur 12, au moyen de la boucle incluant une étape E26 de sélection d'un nouveau canal d'émission et une étape E27 de vérification que tous les canaux d'émission ont été sélectionnés.

Une étape E28 est une étape d'établissement d'une liste des canaux d'émission classée en fonction du niveau de champ radioélectrique mesuré à l'étape E22, sans émission de l'émetteur 120 du dispositif de radiocommunication 12, sur l'entrée du récepteur 131 du dispositif de radiocommunication 13 et de sélection du ou des deux canaux d'émission (selon le cas) qui ont le niveau de champ radioélectrique le plus faible.

Une étape E3 est une étape de configuration des dispositifs de radiocommunication émetteur 12 et récepteur 13 pour que l'émetteur 120 du premier puisse émettre le signal de test et pour que le récepteur 131 du second puisse détecter ce signal de test dans un canal de réception correspondant au canal d'émission de l'émetteur 120.

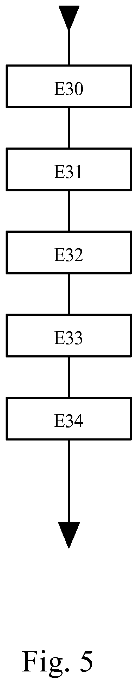

La Fig. 5 illustre les étapes qui sont alors mises en œuvre par l'étape E3. Une étape E30 est une étape de définition des caractéristiques d'émission d'un bit à 1, notamment le canal d'émission utilisé conforme à un canal d'émission sélectionné à l'étape E2 (ou E11), la puissance d'émission (par exemple 0dBm), le type de modulation (par exemple modulation OFDM pour un débit de 54Mb/s), etc.

Une étape E31 est une étape de définition des caractéristiques d'émission d'un bit à 0, notamment le canal d'émission utilisé, soit le même que le canal d'émission d'un bit à 1, soit conforme à l'autre canal d'émission sélectionné à l'étape E2 (ou E11), la puissance d'émission (par exemple -50dBm), le type de modulation (par exemple modulation OFDM pour un débit de 54Mb/s), etc.

Une étape E32 est une étape de définition des caractéristiques de la séquence de bits du signal de test, notamment le nombre de bits (par exemple, 8), la durée d'un bit (par exemple, 10ms).

Une étape E33 est une étape de définition de chacun des bits de la séquence du signal de test, par exemple 10010110.

Une étape E34 est une étape de définition du ou des canaux de réception du récepteur 130 du dispositif de radiocommunication récepteur 13 de manière que sa ou leurs fréquences centrales soient dans la bande de fréquence du ou des canaux d'émission de l'émetteur 120 du dispositif de radiocommunication émetteur 12.

Dans un mode particulier, la fréquence centrale du ou de chaque canal de réception correspond à la fréquence centrale du ou de chaque canal d'émission correspondant.

Dans un autre mode particulier, la fréquence centrale du ou de chaque canal de réception est, dans la bande de fréquence du ou de chaque canal d'émission, décalée latéralement par rapport à la fréquence centrale du ou de chaque canal d'émission correspondant.

Par exemple, la bande de fréquences d'un canal Wi-Fi, du fait qu'il utilise une modulation OFDM, a une largeur de 20MHz correspondant à plusieurs canaux Bluetooth, de largeur 1MHz. L'étape E34 peut positionner le canal de réception Bluetooth sur un de ces 20 canaux de 1MHz inclus dans le spectre occupé par le signal Wi-Fi. Ainsi, il est possible de vérifier que l'interface émettrice transmet un signal de test ayant une étendue spectrale attendue, en l'occurrence 20MHz, pour chaque canal.

Une étape E4 est une étape d'émission, par l'émetteur 120 du dispositif de radiocommunication émetteur 12, conformément à la configuration établie à l'étape E3, de chacun des bits du signal test et de détection, pour chacun d'eux, du signal de test dans un canal de réception du dispositif de radiocommunication récepteur 13 correspondant au canal d'émission de l'émetteur 120 du dispositif de radiocommunication émetteur 12. La détection est par exemple faite par mesure du niveau de champ radioélectrique à l'entrée du récepteur 131 du dispositif de radiocommunication récepteur 13, en l'occurrence de type Bluetooth. Une boucle sur les bits du code du signal de test inclut une étape E5 de sélection du premier bit, une étape E6 de vérification que tous les bits ont été émis et détectés et une étape E7 de sélection d'un nouveau bit.

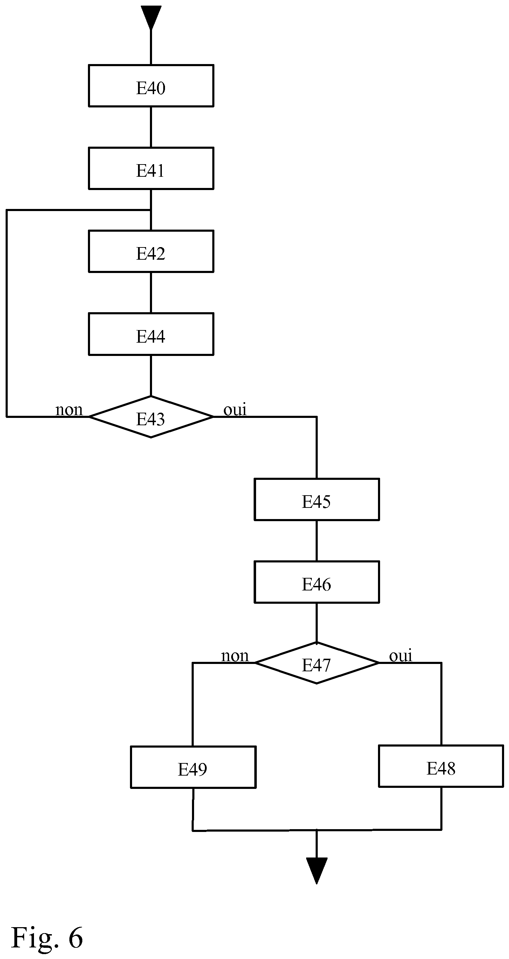

La Fig. 6 illustre les étapes qui sont alors mises en œuvre par l'étape E4. Une étape E40 est une étape de positionnement de l'émetteur 120 du dispositif de radiocommunication émetteur 12 pour qu'il puisse émettre le bit concerné conformément à la configuration précédemment définie et de positionnement du récepteur 131 du dispositif de radiocommunication 13 conformément à la configuration précédemment définie pour qu'il puisse détecter ce bit.

Une étape E41 est une étape d'émission, par l'émetteur 120 du dispositif de radiocommunication 12, du bit concerné.

Une étape E42 est, de manière générale, une étape de détection dudit bit concerné conformément à l'étape E200 décrite précédemment en relation avec la Fig. 2. Dans le mode de réalisation particulier décrit ici, l'étape de détection E42 consiste en ce que le dispositif de radiocommunication récepteur 13 mesure le niveau de champ radioélectrique sur son entrée suite à l'émission du bit par l'émetteur 120 du dispositif de radiocommunication émetteur 12. Cette étape de détection 42 peut avantageusement être répétée plusieurs fois cumulant à chaque fois la mesure effectuée et, ce, tant qu'une étape E43 n'a pas constaté l'expiration de la durée du bit. A l'issue de chaque lecture, une étape E44 incrémente un compteur à partir de 0.

Une étape E45 commande l'arrêt de l'émission du bit considéré lorsque la durée de ce bit a expiré.

Une étape E46 détermine le niveau de champ électrique reçu comme étant le niveau de champ électrique moyen reçu des mesures effectuées à l'étape E42. Ce niveau moyen correspond au niveau cumulé divisé par le nombre de mesures effectuées donné par le compteur de l'étape E44.

Une étape E47 est une étape de vérification que le niveau de champ radioélectrique reçu précédemment déterminé correspond à un niveau de champ radioélectrique attendu. Si tel est le cas, une étape E49 valide le bit considéré et positionne un drapeau à un et, dans le cas contraire, une étape E50 ne le valide pas et positionne le drapeau à zéro. Ce drapeau est utilisé ultérieurement, comme expliqué ci-dessous.

Dans l'exemple mentionné ci-dessus, un bit du mot du signal de test ayant un niveau logique 1 sera transmis par le dispositif de radiocommunication émetteur Wi-Fi 12 sous la forme d'une émission permanente pendant la durée de la mesure d'une salve modulée en OFDM 54Mbps, en l'occurrence 10ms, avec un niveau d'émission à la sortie de l'émetteur de 0dBm. Lors d'une mesure d'étalonnage préalable effectuée dans les mêmes conditions lors de la conception ou de la fabrication de l'équipement concerné, comme décrit ci-dessus, le niveau de champ radioélectrique reçu par le récepteur 131 du dispositif de radiocommunication 13 de type Bluetooth positionné sur un canal ayant la même fréquence centrale a été déterminé comme étant normalement de -33dBm ±5dBm. Ce niveau correspond au niveau attendu. Si, simultanément à la transmission par l'émetteur 120 Wi-Fi d'un bit du signal de test ayant un état logique 1, le dispositif de radiocommunication récepteur Bluetooth 13 positionné sur la même fréquence centrale mesure un niveau de champ radioélectrique reçu supérieur à -38dBm, l'étape E47 considère que ce niveau correspond à celui attendu et valide donc cette mesure en positionnant le drapeau à 1. Dans le cas contraire, elle le positionne à zéro.

De même, un bit du signal de test ayant un niveau logique 0 sera transmis par l'émetteur 120 Wi-Fi sous la forme d'une émission permanente pendant la durée de la mesure d'une salve modulée en OFDM 54Mbps avec un niveau d'émission à la sortie de l'émetteur inférieur à -50dBm. Lors d'une mesure d'étalonnage préalable effectuée dans les mêmes conditions lors de la conception ou de la fabrication de l'équipement, il a pu être déterminé que le signal reçu par le récepteur Bluetooth positionné sur un canal ayant la même fréquence centrale devrait être inférieur à -83dBm.

Si, simultanément à la transmission par l'émetteur 120 Wi-Fi d'un bit du signal de test ayant un état logique 0, le dispositif de radiocommunication récepteur Bluetooth 13 positionné sur la même fréquence centrale mesure un niveau de puissance reçu inférieur ou égal à -38dBm, l'étape E47 considère que ce niveau correspond à celui attendu et valide donc cette mesure en positionnant le drapeau à 1. Dans le cas contraire, elle le positionne à zéro.

Une étape E8 est une étape de vérification que tous les bits du mot du signal de test ont été validés. Pour ce faire, l'étape E8 utilise le drapeau qui a été positionné à l'une des étapes E48 et E49 pour chacun des bits du code du signal de test.

Si tel est le cas, cela signifie que la liaison complète entre l'émetteur 120 du premier dispositif de radiocommunication, ici de type Wi-Fi, et le récepteur 131 du second dispositif de radiocommunication, ici de type Bluetooth, est fonctionnelle (cas A).

Si tel n'est pas le cas, une étape E9 vérifie si le niveau de champ radioélectrique reçu donné par le signal RSSI correspond à un niveau de présence d'un champ radioélectrique mesurable à l'entrée du récepteur 131 du dispositif de radiocommunication récepteur 13, ici de type Bluetooth.

Si tel n'est pas le cas, il est probable que le récepteur 131 du dispositif de radiocommunication récepteur 13 puisse être considéré comme défaillant (cas B). Cette hypothèse peut être confortée si pendant l'opération préalable de cartographie, le signal RSSI n'a montré aucun signal de champ radioélectrique mesurable pour aucun canal. En effet, dans un environnement résidentiel normal, il est peu probable de rencontrer une absence totale de signal dans la bande ISM.

Si le niveau de puissance reçu donné par le signal RSSI correspond à un niveau de présence d'un champ radioélectrique mesurable à l'entrée du récepteur 131 du dispositif de radiocommunication récepteur 13, il est possible que tous les bits du mot du signal de test n'aient pu être validés du fait d'un signal perturbateur venu fausser la mesure. Aussi, au moins un autre essai peut être mis en œuvre en changeant les caractéristiques du signal de test. Pour ce faire, une étape E10 vérifie que le nombre d'essais effectué est supérieur à un certain nombre et si tel est le cas, il est probable que l'émetteur 120 du dispositif de radiocommunication émetteur soit endommagé (cas C). Dans le cas contraire, une étape E11 lance un nouvel essai, par exemple en changeant le ou les canaux d'émission de l'émetteur 120 du dispositif de radiocommunication émetteur 12, soit arbitrairement, soit en choisissant le ou les canaux d'émission suivants dans l'ordre de la liste des canaux établie à l'étape E2.

A la Fig. 1, le contrôleur 11 de l'équipement 10 comporte un processeur 110 relié à une mémoire 111 dans laquelle sont stockés, d'une part, des programmes et, d'autre part, des données utiles à l'exécution par le processeur 110 de ces programmes. Parmi ceux-ci, un programme d'ordinateur chargé dans la mémoire 111 comprend des instructions pour mettre en œuvre, par le processeur 110 de l'unité de traitement 11, les étapes d'un procédé de test tel qu'il vient d'être décrit, dans un mode de réalisation particulier.

Ce programme d'ordinateur peut être chargé dans la mémoire 111 à partir de moyens de stockage externe 40, tels qu'une carte ou clef mémoire, un disque CD ou DVD, etc. et au moyen d'une interface 17 appropriée. Ces moyens de stockage 40 stockent ainsi ce programme d'ordinateur qui comprend des instructions pour mettre en œuvre, lorsqu'il est chargé dans une mémoire 111 d'un contrôleur 11d'un équipement 10 tel que celui représenté à la Fig. 1 et qu'il est exécuté par un processeur 110 dudit contrôleur 11, un procédé de test tel qu'il vient d'être décrit, dans un mode de réalisation particulier.

Ce programme d'ordinateur pourrait également être chargé depuis un serveur (non représenté) accessible via le réseau Internet 30.

## Revendications

1. Procédé de test mis en œuvre par un équipement (10) comprenant au moins un premier et un second dispositif de radiocommunications (12, 13), chacun comportant un émetteur et un récepteur, afin de tester l'émetteur (120) du premier dispositif ou le récepteur (131) du second dispositif, lesdits au moins premier et second dispositifs de radiocommunication partageant une même bande de fréquences mais n'utilisant pas le même protocole de communication, le procédé comprenant les étapes suivantes :
- une étape (E100) d'émission par l'émetteur (120) du premier dispositif de radiocommunication (12) dudit équipement (10) d'un signal de test dans un canal d'émission dudit émetteur (120), et
- une étape (E200) de détection par le récepteur (131) du second dispositif de radiocommunication (13) dudit équipement (10), dans un canal de réception correspondant audit canal d'émission dudit émetteur (120), du signal émis,
ladite étape de détection (E200) consistant à constater le déclenchement par ledit récepteur (131) dudit dispositif de radiocommunication récepteur (13) d'un événement provoqué par la présence dudit signal de test dans un canal utilisé par ledit dispositif de radiocommunication récepteur (13),
et le signal de test étant signé sous la forme d'une séquence de bits prédéterminée temporelle et/ou fréquentielle et/ou de niveaux de puissance émis que le récepteur (131) dudit dispositif de radiocommunication récepteur (13) peut distinguer des schémas d'émission que les émetteurs environnants sont susceptibles de mettre en œuvre.

2. Procédé de test selon la revendication 1, **caractérisé en ce que** ladite étape de détection (E200) comporte :
- une étape (E210) de mesure du niveau de champ radioélectrique pendant un intervalle de temps et dans un canal de réception dudit dispositif de communication récepteur (13) correspondant à l'intervalle de temps et au canal d'émission du signal de test émis par l'émetteur (120) dudit dispositif de communication émetteur (12), et
- une étape (E220) de comparaison de ce niveau mesuré à un niveau cible prédéterminé.

3. Procédé de test selon une des revendications précédentes, **caractérisé en ce qu'**il comporte :
- une étape (E2) de sélection d'au moins un canal d'émission pour ledit dispositif de radiocommunication émetteur (12),
- une étape (E3) de configuration desdits dispositifs de radiocommunication émetteur et récepteur (12 et 13) afin qu'ils puissent respectivement émettre ledit signal de test dans le ou les canaux d'émission sélectionnés et détecter ledit signal de test dans un ou des canaux de réception dudit dispositif de radiocommunication récepteur (13) correspondant au ou aux canaux d'émission sélectionnés.

4. Procédé de test selon la revendication 3, **caractérisé en ce que** ladite étape de sélection (E2) consiste à choisir arbitrairement le ou lesdits canaux d'émission.

5. Procédé de test selon la revendication 3, **caractérisé en ce que** ladite étape de sélection (E2) consiste à choisir, parmi l'ensemble des canaux d'émission supportés par le dispositif de radiocommunication émetteur (12), le ou les canaux d'émission qui soient les plus calmes.

6. Procédé de test selon la revendication 1, **caractérisé en ce que** ladite étape de détection (E200; E42) est effectuée pour chaque bit de ladite séquence dudit signal de test, ledit procédé comportant une étape (E47) de vérification de la validité de chaque bit et une étape (E8) de vérification de la validité de tous les bits du signal de test.

7. Procédé de test selon la revendication 6, **caractérisé en ce qu'**il comporte une étape (E9) de vérification de la présence d'un champ radioélectrique mesurable à l'entrée dudit récepteur (131) du dispositif de radiocommunication récepteur (13).

8. Equipement (10) comprenant au moins un premier et un second dispositifs de radiocommunications (12, 13), chacun comportant un émetteur et un récepteur, afin de tester l'émetteur (120) du premier dispositif ou le récepteur (131) du second dispositif, et partageant une même bande de fréquences mais n'utilisant pas un même protocole de communication, l'équipement étant adapté pour :
- émettre (E100), via l'émetteur (120) du premier dispositif de radiocommunication (12) dudit équipement (10), un signal de test dans un canal d'émission dudit émetteur (120), et
- détecter (E200), par le récepteur (131) du second dispositif de radiocommunication (13) dudit équipement (10), dans un canal de réception correspondant audit canal d'émission dudit émetteur (120), le signal de test émis,
où détecter (E200) le signal de test émis consiste à constater le déclenchement par ledit récepteur (131) dudit dispositif de radiocommunication récepteur (13) d'un événement provoqué par la présence dudit signal de test dans un canal utilisé par ledit dispositif de radiocommunication récepteur (13),
le signal de test étant signé sous la forme d'une séquence de bits prédéterminée temporelle et/ou fréquentielle et/ou de niveaux de puissance émis que le récepteur (131) dudit dispositif de radiocommunication récepteur (13) peut distinguer des schémas d'émission que les émetteurs environnants sont susceptibles de mettre en œuvre.

9. Equipement selon la revendication 8, l'équipement étant adapté pour, lorsqu'il détecte (E200) un signal de test :
- mesurer (E210) un niveau de champ radioélectrique pendant un intervalle de temps et dans un canal de réception dudit dispositif de communication récepteur (13) correspondant à l'intervalle de temps et au canal d'émission du signal de test émis par l'émetteur (120) dudit dispositif de communication émetteur (12), et
- comparer (E220) ce niveau mesuré à un niveau cible prédéterminé.

10. Equipement selon l'une des revendications 8 et 9, l'équipement étant en outre adapté pour :
- sélectionner (E2) au moins un canal d'émission pour ledit dispositif de radiocommunication émetteur (12),
- configurer (E3) lesdits dispositifs de radiocommunication émetteur et récepteur (12 et 13) afin qu'ils puissent respectivement émettre ledit signal de test dans le ou les canaux d'émission sélectionnés et détecter ledit signal de test dans un ou des canaux de réception dudit dispositif de radiocommunication récepteur (13) correspondant au ou aux canaux d'émission sélectionnés.

11. Programme d'ordinateur chargé dans une mémoire (111) d'une unité de traitement (11) d'un équipement (10) comprenant des instructions pour mettre en œuvre, par un processeur (110) de ladite unité de traitement (11), un procédé de test selon une des revendications 1 à 7.

12. Moyens de stockage, **caractérisés en ce qu'**ils stockent un programme d'ordinateur comprenant des instructions pour mettre en œuvre, lorsqu'il est chargé dans une mémoire (111) d'une unité de traitement (10) d'un équipement (10) et qu'il est exécuté par un processeur (110) de ladite unité de traitement (10), un procédé de test selon l'une quelconque des revendications 1 à 7.

## Patentansprüche

1. Testverfahren, das von einer Einrichtung (10) umgesetzt wird, die wenigstens eine erste und eine zweite Funkkommunikationsvorichtung (12, 13) umfasst, die jeweils einen Sender und einen Empfänger aufweisen, um den Sender (120) der ersten Vorrichtung oder den Empfänger (131) der zweiten Vorrichtung zu testen, wobei die wenigstens erste und zweite Funkkommunikationsvorichtung ein selbes Frequenzband teilen, jedoch nicht dasselbe Kommunikationsprotokoll nutzen, wobei das Verfahren die folgenden Schritte umfasst:
- einen Schritt (E100) des Sendens eines Testsignals in einem Sendekanal des Senders (120) durch den Sender (120) der ersten Funkkommunikationsvorichtung (12) der Einrichtung (10), und
- einen Schritt (E200) des Erfassens des gesendeten Signals durch den Empfänger (131) der zweiten Funkkommunikationsvorichtung (13) der Einrichtung (10) in einem Empfangskanal, der dem Sendekanal des Senders (120) entspricht,
wobei der Schritt des Erfassens (E200) darin besteht, die Auslösung eines Ereignisses durch den Empfänger (131) der empfangenden Funkkommunikationsvorichtung (13) festzustellen, das durch das Vorliegen des Testsignals in einem Kanal herbeigeführt wurde, der von der empfangenden Funkkommunikationsvorichtung (13) genutzt wird, und das Testsignal in Form von einer vorbestimmten zeitlichen und/oder frequenziellen Bitsequenz und/oder abgegebenen Leistungspegeln signiert ist, die der Empfänger (131) der empfangenden Funkkommunikationsvorichtung (13) von den Sendeschemata unterscheiden kann, welche die umgebenden Sender einsetzen können.

2. Testverfahren nach Anspruch 1, **dadurch gekennzeichnet, dass** der Schritt des Erfassens (E200) Folgendes aufweist:
- einen Schritt (E210) des Messens des Funkfeldpegels während eines Zeitintervalls und in einem Empfangskanal der empfangenden Funkkommunikationsvorichtung (13), die dem Zeitintervall und dem Sendekanal des Testsignals entsprechen, das vom Sender (120) der sendenden Funkkommunikationsvorichtung (12) gesendet wird, und
- einen Schritt (E220) des Vergleichens dieses gemessenen Pegels mit einem vorbestimmten Zielpegel.

3. Testverfahren nach einem der vorhergehenden Ansprüche, **dadurch gekennzeichnet, dass** es Folgendes aufweist:
- einen Schritt (E2) des Auswählens mindestens eines Sendekanals für die sendende Funkkommunikationsvorichtung (12),
- einen Schritt (E3) des Konfigurierens der sendenden und der empfangenden Funkkommunikationsvorichtung (12 und 13), damit sie jeweils das Testsignal in dem oder den ausgewählten Sendekanälen senden und das Testsignal in einem oder mehreren Empfangskanälen der empfangenden Funkkommunikationsvorichtung (13), die dem oder den ausgewählten Sendekanälen entsprechen, erfassen können.

4. Testverfahren nach Anspruch 3, **dadurch gekennzeichnet, dass** der Schritt des Auswählens (E2) darin besteht, den oder die Sendekanäle willkürlich auszuwählen.

5. Testverfahren nach Anspruch 3, **dadurch gekennzeichnet, dass** der Schritt des Auswählens (E2) darin besteht, aus der Menge der Sendekanäle, die von der sendenden Funkkommunikationsvorichtung (12) unterstützt werden, den oder die Sendekanäle zu wählen, die am ruhigsten sind.

6. Testverfahren nach Anspruch 1, **dadurch gekennzeichnet, dass** der Schritt des Erfassens (E200; E42) für jedes Bit der Sequenz des Testsignals durchgeführt wird, wobei das Verfahren einen Schritt (E47) des Überprüfens der Gültigkeit jedes Bits und einen Schritt (E8) des Überprüfens der Gültigkeit aller Bits des Testsignals aufweist.

7. Testverfahren nach Anspruch 6, **dadurch gekennzeichnet, dass** es einen Schritt (E9) des Überprüfens des Vorliegens eines messbaren Funkfelds am Eingang des Empfängers (131) der empfangenden Funkkommunikationsvorichtung (13) aufweist.

8. Einrichtung (10) umfassend mindestens eine erste und eine zweite Funkkommunikationsvorichtung (12, 13), die jeweils einen Sender und einen Empfänger aufweisen, um den Sender (120) der ersten Vorrichtung oder den Empfänger (131) der zweiten Vorrichtung zu testen, und ein selbes Frequenzband teilen, jedoch kein selbes Kommunikationsprotokoll nutzen, wobei die Einrichtung geeignet ist:
- ein Testsignal in einem Sendekanal des Senders (120) über den Sender (120) der ersten Funkkommunikationsvorichtung (12) der Einrichtung (10) zu senden (E100), und
- das gesendete Testsignal durch den Empfänger (131) der zweiten Funkkommunikationsvorichtung (13) der Einrichtung (10) in einem Empfangskanal, der dem Sendekanal des Senders (120) entspricht, zu erfassen (E200),
wobei Erfassen (E200) des gesendeten Testsignals darin besteht, die Auslösung eines Ereignisses durch den Empfänger (131) der empfangenden Funkkommunikationsvorichtung (13) festzustellen, das durch das Vorliegen des Testsignals in einem Kanal herbeigeführt wurde, der von der empfangenden Funkkommunikationsvorichtung (13) genutzt wird,
wobei das Testsignal in Form von einer vorbestimmten zeitlichen und/oder frequenziellen Bitsequenz und/oder abgegebenen Leistungspegeln signiert ist, die der Empfänger (131) der empfangenden Funkkommunikationsvorichtung (13) von den Sendeschemata unterscheiden kann, welche die umgebenden Sender einsetzen können.

9. Einrichtung nach Anspruch 8, wobei die Einrichtung geeignet ist, wenn sie ein Testsignal erfasst (E200):
- einen Funkfeldpegel während eines Zeitintervalls und in einem Empfangskanal der empfangenden Funkkommunikationsvorichtung (13) zu messen (E210), die dem Zeitintervall und dem Sendekanal des Testsignals entsprechen, das vom Sender (120) der sendenden Funkkommunikationsvorichtung (12) gesendet wird, und
- diesen gemessenen Pegel mit einem vorbestimmten Zielpegel zu vergleichen (E220).

10. Einrichtung nach einem der Ansprüche 8 und 9, wobei die Einrichtung ferner geeignet ist:
- mindestens einen Sendekanal für die sendende Funkkommunikationsvorichtung (12) auszuwählen (E2),
- die sendende und die empfangende Funkkommunikationsvorichtung (12 und 13) zu konfigurieren (E3), damit sie jeweils das Testsignal in dem oder den ausgewählten Sendekanälen senden und das Testsignal in einem oder mehreren Empfangskanälen der empfangenden Funkkommunikationsvorichtung (13), die dem oder den ausgewählten Sendekanälen entsprechen, erfassen können.

11. Computerprogramm, das in einen Speicher (111) einer Verarbeitungseinheit (11) einer Einrichtung (10) geladen ist, umfassend Anweisungen zur Durchführung eines Testverfahrens nach einem der Ansprüche 1 bis 7 durch einen Prozessor (110) der Verarbeitungseinheit (11).

12. Speichermittel, **dadurch gekennzeichnet, dass** sie ein Computerprogramm speichern, das Anweisungen umfasst, um ein Testverfahren nach einem der Ansprüche 1 bis 7 durchzuführen, wenn es in einen Speicher (111) einer Verarbeitungseinheit (10) einer Einrichtung (10) geladen ist und von einem Prozessor (110) der Verarbeitungseinheit (10) ausgeführt wird.

## Claims

1. Test method implemented by an item of equipment (10) comprising at least first and second radio communication devices (12, 13), each comprising a transmitter and a receiver, in order to test the transmitter (120) of the first device or the receiver (131) of the second device, said at least first and second radio communication devices sharing the same frequency band but not using the same communication protocol, the method comprising the following steps:
- a step (E100) of transmitting a test signal over a transmission channel of said transmitter (120), by means of the transmitter (120) of the first radio communication device (12) of said item of equipment (10), and
- a step (E200) of detecting the transmitted signal on a reception channel corresponding to said transmission channel of said transmitter (120), by means of the receiver (131) of the second radio communication device (13) of said item of equipment (10),
said detection step (E200) consisting in observing said receiver (131) of said receiving radio communication device (13) triggering an event caused by the presence of said test signal on a channel used by said receiving radio communication device (13),
and the test signal being signed with a predetermined time and/or frequency and/or transmitted-power-level bit sequence which the receiver (131) of said receiving radio communication device (13) is able to distinguish from the transmission schemes which the surrounding transmitters are liable to implement.

2. Test method according to Claim 1, **characterized in that** said detection step (E200) comprises:
- a step (E210) of measuring the radio field strength during a time interval and on a reception channel of said receiving communication device (13) corresponding to the time interval and to the transmission channel of the test signal transmitted by the transmitter (120) of said transmitting communication device (12), and
- a step (E220) of comparing this measured strength with a predetermined target strength.

3. Test method according to one of the preceding claims, **characterized in that** it comprises:
- a step (E2) of selecting at least one transmission channel for said transmitting radio communication device (12),
- a step (E3) of configuring said transmitting and receiving radio communication devices (12 and 13) in order for them to be able, respectively, to transmit said test signal over the one or more selected transmission channels and to detect said test signal on one or more reception channels of said receiving radio communication device (13) corresponding to the one or more selected transmission channels.

4. Test method according to Claim 3, **characterized in that** said selection step (E2) consists in arbitrarily choosing said one or more transmission channels.

5. Test method according to Claim 3, **characterized in that** said selection step (E2) consists in choosing, from the set of transmission channels supported by the transmitting radio communication device (12), the one or more transmission channels which are the quietest.

6. Test method according to Claim 1, **characterized in that** said detection step (E200; E42) is performed for each bit of said sequence of said test signal, said method comprising a step (E47) of checking the validity of each bit and a step (E8) of checking the validity of all the bits of the test signal.

7. Test method according to Claim 6, **characterized in that** it comprises a step (E9) of checking for the presence of a measurable radio field at the input of said receiver (131) of the receiving radio communication device (13).

8. Item of equipment (10) comprising at least first and second radio communication devices (12, 13), each comprising a transmitter and a receiver, in order to test the transmitter (120) of the first device or the receiver (131) of the second device, and sharing the same frequency band but not using the same communication protocol, the item of equipment being configured to:
- transmit (E100) a test signal over a transmission channel of said transmitter (120), via the transmitter (120) of the first radio communication device (12) of said item of equipment (10), and
- detect (E200) the transmitted signal on a reception channel corresponding to said transmission channel of said transmitter (120), by means of the receiver (131) of the second radio communication device (13) of said item of equipment (10),
wherein detecting (E200) the transmitted test signal consists in observing said receiver (131) of said receiving radio communication device (13) triggering an event caused by the presence of said test signal on a channel used by said receiving radio communication device (13),
the test signal being signed with a predetermined time and/or frequency and/or transmitted-power-level bit sequence which the receiver (131) of said receiving radio communication device (13) is able to distinguish from the transmission schemes which the surrounding transmitters are liable to implement.

9. Item of equipment according to Claim 8, the item of equipment being configured, when it detects (E200) a test signal, to:
- measure (E210) a radio field strength during a time interval and on a reception channel of said receiving communication device (13) corresponding to the time interval and to the transmission channel of the test signal transmitted by the transmitter (120) of said transmitting communication device (12), and
- compare (E220) this measured strength to a predetermined target strength.

10. Item of equipment according to one of Claims 8 and 9, the item of equipment further being configured to:
- select (E2) at least one transmission channel for said transmitting radio communication device (12),
- configure (E3) said transmitting and receiving radio communication devices (12 and 13) in order for them to be able, respectively, to transmit said test signal over the one or more selected transmission channels and to detect said test signal on one or more reception channels of said receiving radio communication device (13) corresponding to the one or more selected transmission channels.

11. Computer program loaded into a memory (111) of a processing unit (11) of an item of equipment (10), comprising instructions for implementing, by means of a processor (110) of said processing unit (11), a test method according to one of Claims 1 to 7.

12. Storage means, **characterized in that** they store a computer program comprising instructions for implementing, when it is loaded into a memory (111) of a processing unit (10) of an item of equipment (10) and when it is executed by a processor (110) of said processing unit (10), a test method according to any one of Claims 1 to 7.
